# EUROPÄISCHE PATENTSCHRIFT

(11) **EP 0 806 318 B1**
(45) Veröffentlichungstag und Bekanntmachung des Hinweises auf die Patenterteilung: **04.10.2001**
(21) Anmeldenummer: 96119130.1
(22) Anmeldetag: 29.11.1996
(51) Int. Cl.: B60K 15/077, F02M 37/02

(54) **Kraftstoffördereinrichtung eines Kraftfahrzeuges**
Fuel feeding device for a motor vehicle
Installation d'alimentation de carburant pour un véhicule automobile

(30) Priorität: 09.05.1996 DE 19618649
(43) Veröffentlichungstag der Anmeldung: 12.11.1997
(73) Patentinhaber: ROBERT BOSCH GMBH, 70442 Stuttgart (DE)
(72) Erfinder: Kleppner, Stephan, 75015 Bretten (DE); Strohl, Willi, 71717 Beilstein (DE)

(56) Entgegenhaltungen:
- WO-A-89/07712
- DE-A- 2 442 152
- DE-A- 3 732 415

## Beschreibung

### Stand der Technik

Die Erfindung geht aus von einer Kraftstoffördereinrichtung eines Kraftfahrzeuges nach der Gattung des Anspruchs 1.

Eine Kraftstoffördereinrichtung eines Kraftfahrzeuges ist zum Beispiel aus der DE 36 12 194 C1 bekannt. Diese Kraftstoffördereinrichtung eines Kraftfahrzeuges weist einen Kraftstoffbehälter auf, in dem eine Kraftstoffstauvorrichtung vorgesehen ist. Diese Kraftstoffstauvorrichtung dient zum Bereitstellen einer für den Betrieb der Brennkraftmaschine ständig ausreichenden Kraftstoffmenge. Aus dieser Kraftstoffstauvorrichtung wird über eine Kraftstoffleitung mit einem Kraftstofförderaggregat Kraftstoff zur Brennkraftmaschine gefördert. Damit in der Kraftstoffstauvorrichtung eine ständig ausreichende Kraftstoffmenge bereitgestellt werden kann, ist eine im Kraftstoffbehälter bodenseitig angeordnete Strahlpumpe außerhalb der Kraftstoffstauvorrichtung vorgesehen. Diese Strahlpumpe weist eine an eine Kraftstoffrücklaufleitung angeschlossene Injektordüse und einen mit Abstand nachgeordneten Trichter auf, der mit einer in die Kraftstoffstauvorrichtung eintretenden Leitung verbunden ist. Über den in einer Kraftstoffrücklaufleitung in den Kraftstoffbehälter zurückgeführten Überschußkraftstoff wird die Strahlpumpe betrieben, damit aus dem unteren Teil des Kraftstoffbehälters eine Kraftstoffmenge in die Kraftstoffstauvorrichtung gepumpt wird.

Bei einem derartigen Kraftstoffbehälter, der auch in Form von zwei Teilen ausgebildet sein kann, die durch einen erhöhten Höcker oder Sattel voneinander getrennte Böden aufweisen, ist erforderlich, daß in jedem dieser Teile eine Saugstrahlpumpe vorgesehen ist, damit der Kraftstoff in die Kraftstoffstauvorrichtung bzw. in den Teil des Kraftstoffbehälters übergeführt werden kann, von dem die Kraftstoffleitung den Kraftstoff entnimmt, um zur Brennkraftmaschine zu fördern.

Durch die DE 24 42 152 A1 ist eine Kraftstoffördereinrichtung eines Kraftfahrzeugs gemäß dem Oberbegriff des Anspruchs 1 bekannt. Diese Kraftstoffördereinrichtung weist einen Kraftstoffbehälter mit mehreren Teilen auf, deren Böden voneinander getrennt sind. Es ist ein Kraftstofförderaggregat vorgesehen, das Kraftstoff von dem Kraftstoffbehälter zu einer Brennkraftmaschine des Kraftfahrzeugs fördert. In einem Teil des Kraftstoffbehälters ist eine Kraftstoffentnahmevorrichtung vorgesehen, die mit einer Kraftstoffleitung verbunden ist. Die Kraftstoffentnahmevorrichtung saugt aus dem Teil des Kraftstoffbehälters und über eine Saugleitung aus dem weiteren Teil des Kraftstoffbehälters Kraftstoff ab. Außerdem ist ein Schwimmerventil vorgesehen, durch das bewirkt wird, dass die Kraftstoffentnahmevorrichtung bei ausreichendem Kraftstoffniveau in dem Teil des Kraftstoffbehälters, in dem diese angeordnet ist, nur aus diesem Teil Kraftstoff absaugt und erst wenn das Kraftstoffniveau so weit gesunken ist, dass das Schwimmerventil geschlossen ist, Kraftstoff über die Saugleitung aus dem weiteren Teil des Kraftstoffbehälters absaugt. Es ergeben sich hierbei unterschiedliche Kraftstoffniveaus in den Teilen des Kraftstoffbehälters, was die Erfassung des Kraftstoffniveaus im Kraftstoffbehälter erschwert.

### Vorteile der Erfindung

Die erfindungsgemäße Kraftstoffördereinrichtung mit den Merkmalen gemäß Anspruch 1 hat demgegenüber den Vorteil, dass in den Teilen des Kraftstoffbehälters ein gleiches Kraftstoffniveau vorliegt. Dies stellt sich automatisch nach dem Start der Brennkraftmaschine von selbst ein, da in den einzelnen Saugleitungen ein Unterdruck erzeugt wird, so dass im Bereich der Höcker zwischen den Teilen des Kraftstoffbehälters befindliches Gas in den Saugleitungen abgesaugt wird und somit aufgrund des unterschiedlichen Druckniveaus in den Teilen des Kraftstoffbehälters sich selbständig ein Niveauausgleich einstellt. Dadurch kann die Anordnung von einem weiteren Tankstandsgeber in dem jeweiligen Teil des Kraftstoffbehälters entfallen, wodurch eine kostengünstige und in der Montage einfache Kraftstoffördereinrichtung geschaffen ist.

Nach einer vorteilhaften Ausgestaltung der Erfindung ist vorgesehen, daß der Ausgang der Kraftstoffentnahmevorrichtung als Venturi-Düse ausgebildet ist, wobei der Zuflußstutzen der Saugleitung aus dem weiteren Teil des Kraftstoffbehälters im engsten Querschnitt der Düse angeordnet ist. Durch den Venturi-Effekt kann ein Unterdruck in dem Zuflußstutzen und somit in der Saugleitung geschaffen werden, wodurch Kraftstoff aus dem weiteren Teil des Kraftstoffbehälters angesaugt werden kann.

Eine weitere alternative Ausführungsform der Erfindung sieht vor, daß der Ausgang der Kraftstoffentnahmevorrichtung als Düse ausgebildet ist, wobei in der Längsachse der Düse im engsten Querschnitt der Zuflußstutzen angeordnet ist, an den die Saugleitung von dem weiteren Teil des Krafstoffbehälters anschließbar ist. Dadurch kann wiederum an dem freien Ende des Zuflußstutzen ein Unterdruck erzeugt werden, wodurch der Kraftstoff aus dem weiteren Teil des Kraftstoffbehälters gefördert werden kann.

Nach einer weiteren vorteilhaften Ausgestaltung der Erfindung ist vorgesehen, daß die Kraftstoffentnahmevorrichtung einen Zuflußstutzen aufweist, an den die in den weiteren Teil des Kraftstoffbehälters mündende Saugleitung anschließbar ist und in einer Mantelfläche zumindest eine Einlaßöffnung für Kraftstoff vorgesehen ist, um von dem Teil des Kraftstoffbehälters Kraftstoff entnehmen zu können, in dem die Kraftstoffentnahmevorrichtung angeordnet ist. Durch das Kraftstofförderaggregat wird über einen Ausgang der Kraftstoffentnahmevorrichtung, der mit der Kraftstofförderleitung verbunden ist, eine Saugkraft im Inneren einer insbesondere glockenförmigen Kraftstoffentnahmevorrichtung erzeugt. Durch diesen Unterdruck wird Kraftstoff über den Zuflußstutzen und der zumindest einen Einlaßöffnung angesaugt. Dabei bildet sich im Inneren der Kraftstoffentnahmevorrichtung ein Mischbereich, aus dem der Kraftstoff über den Ausgang der Kraftstoffentnahmevorrichtung abgeführt und zur Brennkraftmaschine gefördert wird. Über die Querschnittsfläche des Zuflußstutzens und der bzw. den Einlaßöffnungen kann die Durchflußmenge bestimmbar sein, so daß die gleiche Menge an Kraftstoff aus den jeweiligen Teilen des Kraftstoffbehälters entnommen werden kann. In Abhängigkeit der unterschiedlichen Größen der Teile des Kraftstoffbehälters kann die Querschnittsfläche daran angepaßt sein, so daß eine gleichmäßige Entnahme der Kraftstoffmenge gegeben sein kann. Nach einer weiteren vorteilhaften Ausgestaltung der Erfindung ist vorgesehen, daß an dem freien Ende des Abzweigs ein Rückschlagventil vorgesehen ist. Dadurch kann erzielt werden, daß bei dem Fördern von Kraftstoff nicht nur aus dem Teil des Kraftstoffbehälters eine Kraftstoffmenge entnommen wird, in dem das freie Ende des Abzweigs angeordnet ist, sondern daß auch von dem zumindest einen weiteren Teil des Kraftstoffbehälters über eine Saugleitung eine entsprechende Kraftstoffmenge entnommen werden kann.

Nach einer weiteren vorteilhaften Ausgestaltung der Erfindung ist vorgesehen, daß die Kraftstoffentnahmevorrichtung als Gehäuse ausgebildet ist. Somit kann eine konstruktiv einfach ausgestaltete und kostengünstig herstellbare Kraftstoffentnahmevorrichtung geschaffen sein. Das Gehäuse kann beispielsweise aus Kunststoff als Spritzgußteil herstellbar sein.

### Zeichnung

Mehrere Ausführungsbeispiele der Erfindung sind in der Zeichnung dargestellt und in der nachfolgenden Beschreibung näher erläutert. Es zeigen:
- Fig. 1: eine Kraftstoffördereinrichtung eines Kraftfahrzeuges zum Versorgen einer Brennkraftmaschine mit Kraftstoff aus einem Vorratsbehälter,
- Fig. 2: einen schematisch dargestellten Vollquerschnitt einer Kraftstoffentnahmevorrichtung,
- Fig. 3: eine alternative Ausführungsform der Kraftstoffentnahmevorrichtung und
- Fig. 4: eine weitere alternative Ausführungsform einer Kraftstoffentnahmevorrichtung.

### Beschreibung der Ausführungsbeispiele

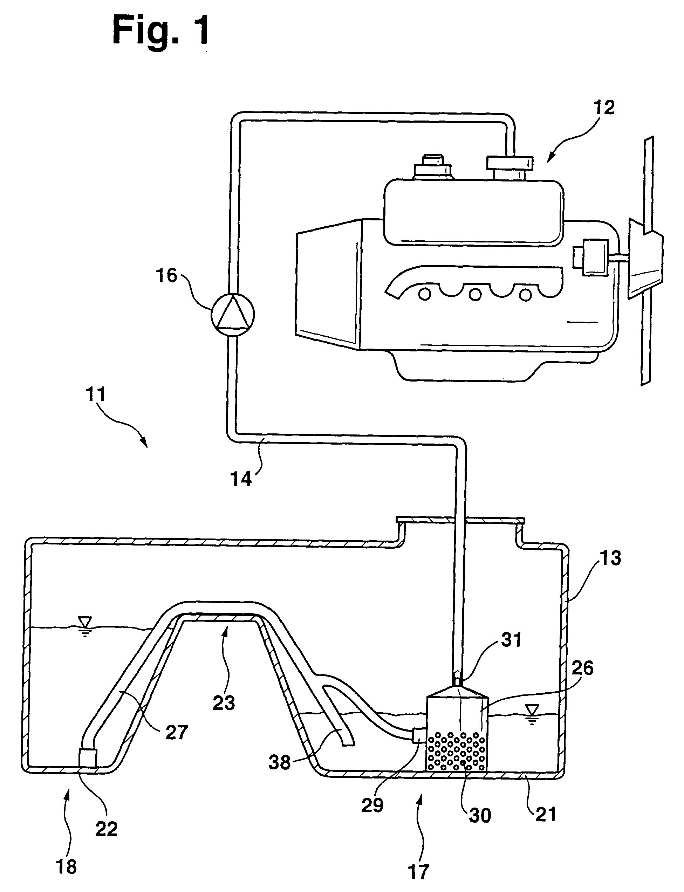

In Fig. 1 ist vereinfacht eine Kraftstoffördereinrichtung 11 dargestellt, die zur Versorgung einer Brennkraftmaschine 12 eines Kraftfahrzeuges mit Kraftstoff dient. Aus einem Kraftstoffbehälter 13 wird über eine Kraftstofförderleitung 14, in der ein Kraftstofförderaggregat 16 angeordnet ist, Kraftstoff zur Brennkraftmaschine 12 gefördert. Das Kraftstofförderaggregat 16 kann in beliebiger Weise ausgeführt sein.

Der Kraftstoffbehälter 13 ist zerklüftet ausgebildet und weist beispielhaft zwei Teile 17, 18 auf, deren Böden 21, 22 durch erhöhte Höcker oder Sattel 23 voneinander getrennt sind. Derartige Kraftstoffbehälter 13 können auch mehrere Teile 17, 18 aufweisen, deren Böden durch erhöhte Sattel oder Höcker 23 voneinander getrennt sind. Derartige Sattelkraftstoffbehälter werden bevorzugt in Kraftfahrzeuge mit einem geringen Platzangebot eingebaut.

Der Kraftstoffbehälter 13 weist in dessen Teil 17 bodenseitig eine Kraftstoffentnahmevorrichtung 26 auf, die bevorzugt als Gehäuse ausgebildet ist. In einer Mantelfläche des Gehäuses, das insbesondere glockenförmig ausgebildet ist, sind Öffnungen 30 vorgesehen. Diese können auch groß ausgebildet sein, so daß das Gehäuse 26 aus Stegen ausgebildet sein kann. Desweiteren weist die Mantelfläche des Gehäuses 26 einen Zuflußstutzen 29 auf, an den eine Saugleitung 27 anschließbar ist. Das freie Ende der Saugleitung 27 ist in dem Teil 18 des Kraftstoffbehälters 13 angeordnet. Dadurch kann über einen Ausgang 31 des Gehäuses 26 eine Kraftstoffmenge aus den Teilen 17, 18 des Kraftstoffbehälters 13 abgeführt und über die Kraftstoffleitung 14 zur Brennkraftmaschine gefördert werden.

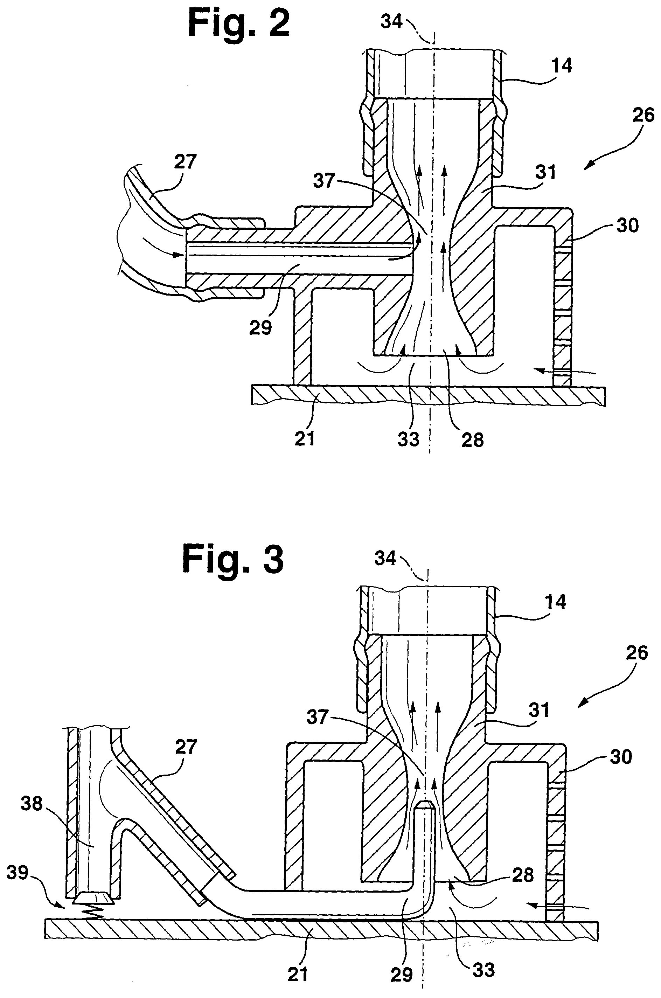

In Fig. 2 ist eine Kraftstoffentnahmevorrichtung 26 dargestellt. Der Ausgang 31 ist düsenförmig ausgebildet, wobei im Bereich des engsten Querschnittes 37 der Zuflußstutzen 29 angeordnet ist und einmündet. Dadurch ist eine sogenannte Venturi-Düse gebildet, wodurch aufgrund der Kraftstoffmenge, die über die Eintrittsöffnung 28 in den Ausgang 31 strömt, im engsten Querschnitt 37 durch den Venturi-Effekt ein Unterdruck in der Saugleitung 27 erzeugt wird. Dadurch kann Kraftstoff aus dem Teil 18 des Kraftstoffbehälters 13 gefördert werden. Die Kraftstoffentnahmevorrichtung 26 kann ein Gehäuse oder auch Stege zu dessen Anordnung und Befestigung am Boden 21 des Kraftstoffbehälters 13 aufweisen.

In Fig. 3 ist eine alternative Saugvariante dargestellt. Der Ausgang 31 ist wiederum als Düse mit einem sich verengenden Querschnitt 37 ausgebildet. Im Bereich des engsten Querschnittes 37 ist der Zuflußstutzen 29 mit seinem freien Ende angeordnet. Dieser Zuflußstutzen 29 ist in der Längsachse 34 des Ausgangs 31 angeordnet. Infolge des Venturi-Effektes wird ebenfalls hier ein Unterdruck in dem Zuflußstutzen 29 durch die Kraftstoffmenge, die über die Eintrittsöffnung 28 in den Ausgang 31 einmündet, erzeugt. Somit wird über die Leitung 27 Kraftstoff angesaugt.

Die Saugleitung 27, die mit dem Zuflußstutzen 29 in Verbindung steht, kann einen Abzweig 38 aufweisen, dessen freies Ende in dem Teil 17 des Kraftstoffbehälters 13 angeordnet ist. Der Abzweig 38 kann zwischen dem Höcker 23 und dem Zuflußstutzen 29 angeordnet sein, wobei erforderlich ist, daß das freie Ende des Abzweigs 38 nicht in den Teil des Kraftstoffbehälters 13 mündet, in dem das freie Ende der Saugleitung 27 angeordnet ist. Am freien Ende des Abzweigs 38 kann ein Rückschlagventil 39 angeordnet sein, damit bei einer Erzeugung eines Unterdrucks in der Saugleitung 27 nicht aus dem Teil 17 des Kraftstoffbehälters 13, sondern aus dem Teil 18 des Kraftstoffbehälters 13 die Kraftstoffmenge entnommen wird.

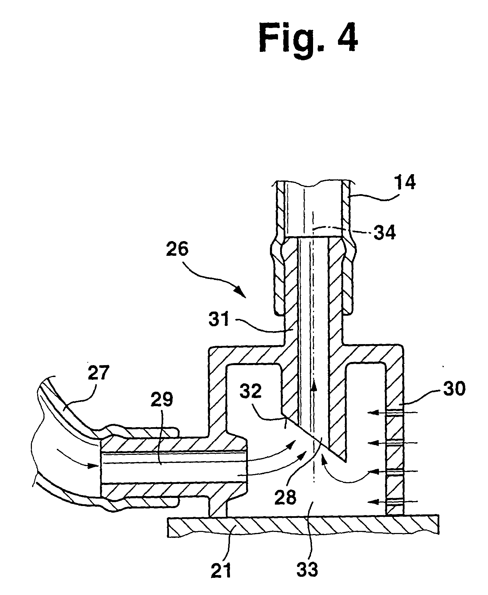

In Fig. 4 ist eine weitere Ausführungsform der Kraftstoffentnahmevorrichtung 26 im Vollquerschnitt dargestellt. Diese Kraftstoffentnahmevorrichtung 26 weist im Inneren einen Mischbereich 33 auf, in dem aufgrund des in der Kraftstoffleitung 14 erzeugten Unterdrucks über die Öffnungen 30 und den Zuflußstutzen 29 Kraftstoff in den Mischbereich 33 strömt. Der Ausgang 31 des Gehäuses 26 weist ein in den Mischbereich 33 ragendes Ende auf, das in einem Winkel von beispielsweise 45° zur Längsachse 34 des Ausgangs 31 angeordnet ist. Dabei ist die freie Endfläche 32 auf den Zuflußstutzen 29 hin gerichtet. Dadurch kann erzielt werden, daß bei dem Erzeugen eines Unterdruckes im Ausgang 31 eine größere Wirkung auf den Zuflußstutzen 29 als auf die Eintrittsöffnung 28 erfolgen kann, damit der zum Ansaugen der Kraftstoffmenge aus dem Teil 18 des Kraftstoffbehälters 13 erforderliche Unterdruck aufgebaut werden kann.

Die Kraftstoffentnahmevorrichtung bzw. das Gehäuse 26 arbeitet folgendermaßen: Das Kraftstofförderaggregat 16 wird in Betrieb genommen und erzeugt in der Kraftstoffleitung 14 einen Unterdruck, der über den Einlaß 16 auf den Mischbereich 33 wirkt und darin eine Saugkraft erzeugt. Dadurch kann einerseits eine Kraftstoffmenge aus dem Teil 17 des Kraftstoffbehälters 13 und andererseits in der Saugleitung 27 ebenfalls durch den Venturi-Effekt ein Unterdruck aufgebaut werden, so daß aus dem Teil 18 des Kraftstoffbehälters 13 ebenfalls Kraftstoff entnommen wird. Durch den erzeugten Unterdruck wird zunächst die im Bereich des Höckers 23 vorliegende Luft angesaugt. Dieser folgt dann der Kraftstoff aus dem Teil 18 des Kraftstoffbehälters 13. Somit kann aus beiden Teilen 17, 18 des Kraftstoffbehälters 13 eine Kraftstoffmenge entnommen werden, wobei in Abhängigkeit der Querschnittsöffnungen von dem Zuflußstutzen 29 als auch der bzw. der Eintrittsöffnung 28 die jeweils zu fördernde Kraftstoffmenge von den Teilen 17, 18 beeinflußt werden kann.

Durch den Abzweig 38 in der Saugleitung 27 kann erreicht werden, daß bei einem unterschiedlichen Niveau des Kraftstoffes in den Teilen 17, 18 ein selbständiger Ausgleich geschaffen werden kann. Sobald einmal in der Saugleitung 27 ein Unterdruck erzeugt wird und das Niveau der Kraftstoffmenge in dem Teil 18 höher als das in dem Teil 17 des Kraftstoffbehälters 13 sein sollte, erfolgt selbständig ein Ausgleich, solange sich der Zuflußstutzen 29 unterhalb der Kraftstoffoberfläche befindet. Aufgrund der unterschiedlich wirkenden Drücke durch die unterschiedlichen Füllstandpegel strömt Kraftstoff aus dem Teil 18 in den Teil 17 über den Abzweig 38. Dadurch kann erzielt werden, daß ein Tankstandsgeber in dem Teil 17 des Kraftstoffbehälters 13 entfallen kann. Darüber hinaus ist eine einfache Montage und Konstruktion möglich.

## Patentansprüche

1. Kraftstoffördereinrichtung eines Kraftfahrzeuges mit einem Kraftstoffbehälter (13), der mehrere Teile (17,18) aufweist und deren Böden (21,22) voneinander getrennt sind, mit einem Kraftstofförderaggregat (16), das Kraftstoff von dem Kraftstoffbehälter (13) zu einer Brennkraftmaschine (12) des Kraftfahrzeugs fördert, wobei in einem Teil (17) des Kraftstoffbehälters (13) eine mit einer Kraftstoffleitung (14) verbundene Kraftstoffentnahmevorrichtung (26) vorgesehen ist, die aus diesem Teil (17) des Kraftstoffbehälters (13) und über eine Saugleitung (27) aus dem zumindest einen weiteren Teil (18) des Kraftstoffbehälters (13) Kraftstoff absaugt, **dadurch gekennzeichnet, dass** die die Teile (17,18) des Kraftstoffbehälters (13) verbindende Saugleitung (27) vor der Kraftstoffentnahmevorrichtung (26) einen Abzweig (38) aufweist, der in den Teil (17) des Kraftstoffbehälters (13) mündet, in dem die Kraftstoffentnahmevorrichtung (26) angeordnet ist.

2. Kraftstoffördereinrichtung nach Anspruch 1, **dadurch gekennzeichnet, daß** die Kraftstoffentnahmevorrichtung (26) einen mit der Saugleitung (27) in Verbindung stehenden Zuflußstutzen (29) und zumindest eine Eintrittsöffnung (28) aufweist, so **daß** über den Zuflußstutzen (29) aus einem Teil (18) des Kraftstoffbehälters (13) und über die zumindest eine Eintrittsöffnung (28) eine Kraftstoffmenge aus dem Teil (17) des Kraftstoffbehälters (13) der Kraftstoffentnahmevorrichtung (26) zuführbar ist.

3. Kraftstoffördereinrichtung nach Anspruch 1, **dadurch gekennzeichnet, daß** die Kraftstoffentnahmevorrichtung (26) einen mit der Kraftstoffleitung (14) verbundenen Ausgang (31) aufweist, der als Venturi-Düse ausgebildet ist, wobei im engsten Querschnitt (37) des Ausgangs (31) der Zuflußstutzen (29) angeordnet ist.

4. Kraftstoffördereinrichtung nach Anspruch 1, **dadurch gekennzeichnet, daß** die Kraftstoffentnahmevorrichtung (26) einen mit der Kraftstoffleitung (14) in Verbindung stehenden, düsenförmig ausgebildeten Ausgang (31) aufweist, in dessen engsten Querschnitt (37) ein Zuflußstutzen (29) der Saugleitung (27) von dem zumindest einem weiteren Teil (18) des Kraftstoffbehälters (13) in einer Längsachse (34) des Ausgangs (31) angeordnet ist.

5. Kraftstoffördereinrichtung nach Anspruch 1, **dadurch gekennzeichnet, daß** an dem freien Ende des Abzweigs (38) ein Rückschlagventil (39) angeordnet ist, welches ein Einströmen einer Kraftstoffmenge in den Abzweig (38) sperrt.

6. Kraftstoffördereinrichtung nach Anspruch 1, **dadurch gekennzeichnet, daß** die Kraftstoffentnahmevorrichtung (26) als Gehäuse ausgebildet ist.

## Claims

1. Fuel delivery device of a motor vehicle, having a fuel tank (13), which has a plurality of parts (17, 18) and the bottoms (21, 22) of which are separate from one another, each having a fuel delivery unit (16) which delivers fuel from the fuel tank (13) to an internal combustion engine (12) of the motor vehicle, a fuel removal device (26) being provided in one part (17) of the fuel tank (13), the said fuel removal device being connected to a fuel line (14) and extracting fuel from this part (17) of the fuel tank (13) and, via a suction line (27), from at least one further part (18) of the fuel tank (13), **characterized in that** the suction line (27), which connects the parts (17, 18) of the fuel tank (13), has, upstream of the fuel removal device (26), a branch line (38) which opens into that part (17) of the fuel tank (13) in which the fuel removal device (26) is arranged.

2. Fuel delivery device according to Claim 1, **characterized in that** the fuel removal device (26) has an inflow connection (29), which is connected to the suction line (27), and at least one inlet opening (28), with the result that from a part (18) of the fuel tank (13) via the inflow connection (29) and via the at least one inlet opening (28) a quantity of fuel from the part (17) of the fuel tank (13) can be supplied to the fuel removal device (26).

3. Fuel delivery device according to Claim 1, **characterized in that** the fuel removal device (26) has an outlet (31) which is connected to the fuel line (14) and designed as a Venturi nozzle, the inflow connection (29) being arranged in the narrowest cross section (37) of the output (31).

4. Fuel delivery device according to Claim 1, **characterized in that** the fuel removal device (26) has an output (31) which is connected to the fuel line (14), is of nozzle-shaped design and in whose narrowest cross-section (37) an inflow connection (29) of the suction line (27) from the at least one further part (18) of the fuel tank (13) is arranged in a longitudinal axis (34) of the output (31).

5. Fuel delivery device according to Claim 1, **characterized in that** there is arranged at the free end of the branch line (38) a non-return valve (39) which blocks an inflow of a quantity of fuel into the branch line (38).

6. Fuel delivery device according to Claim 1, **characterized in that** the fuel removal device (26) is designed as a housing.

## Revendications

1. Installation d'alimentation en carburant d'un véhicule automobile comprenant un réservoir à carburant (13) ayant plusieurs parties (17, 18) et dont les fonds (21, 22) sont séparés les uns des autres, une unité de transfert de carburant (16) qui débite le carburant du réservoir (13) au moteur à combustion interne (12) du véhicule, et dans une partie (17) du réservoir à carburant (13), un dispositif de prélèvement de carburant (26) relié à une conduite de carburant (14), cette partie de prélèvement aspirant le carburant de cette partie (17) du réservoir (13) et d'au moins une autre partie (18) du réservoir (13) par l'intermédiaire d'une conduite d'aspiration (27),
**caractérisée en ce que**
la conduite d'aspiration (27) qui relie les parties (17, 18) du réservoir à carburant (13) comporte une branche de dérivation (38) en amont du dispositif de prélèvement de carburant (26), cette branche de dérivation débouchant dans la partie (17) du réservoir à carburant (13) dans laquelle se trouve le dispositif de prélèvement de carburant (26).

2. Installation d'alimentation en carburant selon la revendication 1,
**caractérisée en ce que**
le dispositif de prélèvement comporte un ajutage d'alimentation (29) communiquant avec la conduite d'aspiration (27) et au moins un orifice d'entrée (28), de sorte que par l'ajutage d'alimentation (29) le carburant puisse être prélevé d'une partie (18) du réservoir (13) et par au moins un orifice d'entrée (28) de la partie (17) du réservoir (13), pour être fourni au dispositif de prélèvement de carburant (26).

3. Installation d'alimentation en carburant selon la revendication 1,
**caractérisée en ce que**
le dispositif de prélèvement de carburant (26) comporte une sortie (31) reliée à la conduite de carburant (14), cette sortie étant en forme de venturi et dans la section la plus étroite (37) de la sortie (31) se trouve l'ajutage d'alimentation (29).

4. Installation d'alimentation en carburant selon la revendication 1,
**caractérisée en ce que**
le dispositif de prélèvement de carburant (26) comporte une sortie (31) en forme de buse communiquant avec la conduite de carburant (14) et la section la plus étroite (37) de cette sortie est occupée suivant l'axe longitudinal (34) de la sortie (31) par l'ajutage d'alimentation (29) de la conduite d'aspiration (27) venant de l'autre partie (18) du réservoir à carburant (13).

5. Installation d'alimentation en carburant selon la revendication 1,
**caractérisée en ce que**
l'extrémité libre de la branche de dérivation (38) comporte un clapet antiretour (39) qui bloque le passage de carburant dans la branche de dérivation (38).

6. Installation d'alimentation en carburant selon la revendication 1,
**caractérisée en ce que**
le dispositif de prélèvement de carburant (26) est en forme de boîtier.
